**Europäisches Patentamt**

**European Patent Office**

**Office européen des brevets**

(19)

(11) Veröffentlichungsnummer: **0 080 676**

**A1**

# EUROPÄISCHE PATENTANMELDUNG

(12)

(21) Anmeldenummer: **82110738.0**

(22) Anmeldetag: **20.11.82**

(51) Int. Cl.³: **G 01 B 7/10**

(30) Priorität: **27.11.81 DE 3147059**

(43) Veröffentlichungstag der Anmeldung:
**08.06.83 Patentblatt 83/23**

(84) Benannte Vertragsstaaten:
**AT BE CH FR LI NL SE**

(71) Anmelder: **Thyssen Edelstahlwerke AG**
**Thyssenstrasse 1**
**D-4000 Düsseldorf(DE)**

(72) Erfinder: **Eisenburger, Heinrich, Ing. grad.**
**Auf dem Roland 7**
**D-5800 Hagen 5(DE)**

(72) Erfinder: **Görrissen, Peter**
**Klippchen 23**
**D-5800 Hagen 1(DE)**

(72) Erfinder: **Sobottka, Gert, Dr.-Ing.**
**Gräfin-Kielmanseggestrasse 4**
**D-4714 Selm-Cappenberg(DE)**

(72) Erfinder: **Hübner, Klaus-Dieter, Dr.-Ing.**
**Gotenstrasse 152**
**D-5840 Schwerte(DE)**

(54) **Prüfgerät für Betonüberdeckung.**

(57) Die Erfindung betrifft ein Prüfgerät für die Ermittlung der Größe der Betonüberdeckung an Betonteilen mit Stahlarmierung. Kennzeichen ist ein in einen Topf (3) aus nichtmagnetisierbarem Material axial verstellbar eingesetzter Dauermagnet (1).

Fig.4

EP 0 080 676 A1

Die Neuerung betrifft ein Prüfgerät für die Ermittlung der Größe der Betonüberdeckung an Betonteilen mit Stahlarmierung. Unter "Betonüberdeckung" wird die Stärke der über der Stahlarmierung (Moniereisen) liegenden Betonschicht verstanden.

Durch mangelhafte Betonüberdeckung entstehen häufig Bauschäden. Daher ist die jeweils vorgeschriebene Betonüberdeckung genormt (DIN 1045).

Bei der Abnahme von stahlarmierten Betonbauten oder -bauteilen muß die Einhaltung der vorgeschriebenen Betonüberdeckung geprüft werden. Hierzu werden elektronische Meßgeräte verwendet, mit denen durch Verstimmung eines Schwingkreises auf induktivem Weg die Lage (Abstand von der Oberfläche) des Moniereisens gemessen werden kann. Mit diesen bekannten Geräten kann man zwar genaue Meßwerte erhalten, jedoch sind die Geräte teuer.

Aufgabe der Neuerung ist die Schaffung eines einfacher aufgebauten und damit preiswerteren Prüfgeräts zur Messung der Betonüberdeckung an stahlarmiertem Beton.

Diese Aufgabe wird neuerungsgemäß durch ein Prüfgerät mit den in den Ansprüchen gekennzeichneten Merkmalen gelöst.

Bei dem neuerungsgemäßen Prüfgerät zur Feststellung der Betonüberdeckung wird die in Abhängigkeit des Abstands zu ferromagnetischen Teilen variable Haftkraft eines Dauermagneten oder Dauermagnetsystems ausgenutzt. Das neuerungsgemäße Prüfgerät kann zuvor auf die vorgeschriebene Betonüberdeckung eingestellt (geeicht) sein. Es ist aber auch möglich, an Ort und Stelle durch Verstellen des Dauermagneten die Größe der Betonüberdeckung mithilfe einer Justier- oder Eichvorrichtung zu messen. Die Arbeitsweise mit dem neuerungsgemäßen Prüfgerät ist wie folgt:

0080676

Zunächst wird der Dauermagnet auf den geringstmöglichen Luftspalt eingestellt. Mit dieser empfindlichsten Einstellung des Geräts wird die Lage des
Moniereisens aufgespürt. Diese Stelle wird an dem zu prüfenden Betonteil
gekennzeichnet. Der Dauermagnet wird dann in dem Gestell oder Topf in
seiner Lage durch axiale Verstellung (Verschieben oder Verdrehen) auf die
Größe der vorgeschriebenen Betonüberdeckung eingestellt. Das neuerungsgemäße Prüfgerät wird an die gekennzeichnete Stelle des zu prüfenden Betonteils angesetzt. Wird keine Haftkraft wahrgenommen, so liegt eine höhere
als die vorgeschriebene Betonüberdeckung vor. Wird eine spürbare Haftkraft
wahrgenommen, so ist die Betonüberdeckung des zu prüfenden Betonteils
kleiner als vorgeschrieben. Wird gerade eine spürbare Haftkraft wahrgenommen, so liegt die Größe der Betonüberdeckung auf dem vorgeschriebenen
Wert.

Liegt die Größe der Betonüberdeckung nicht im vorgeschriebenen Rahmen, so
kann das jeweilige Unter- oder Übermaß durch Verstellen des Dauermagneten
soweit, daß gerade Haftkraft spürbar wird, anhand einer Eich- oder Justiervorrichtung bestimmt werden.

Weitere Einzelheiten werden im Zusammenhang mit der Beschreibung der in
der Zeichnung dargestellten Ausführungsbeispiele erläutert.

Figur 1 zeigt ein Ausführungsbeispiel des Prüfgeräts im Längsschnitt und
Figur 2 in Draufsicht,
Figur 3 ist die Draufsicht eines weiteren Ausführungsbeispiels des Prüfgeräts,
Figur 4 ist der Längsschnitt eines weiteren Ausführungsbeispiels des Prüfgeräts und
Figur 5 zeigt im Schnitt eine Eich- oder Justiervorrichtung für das neuerungsgemäße Prüfgerät.

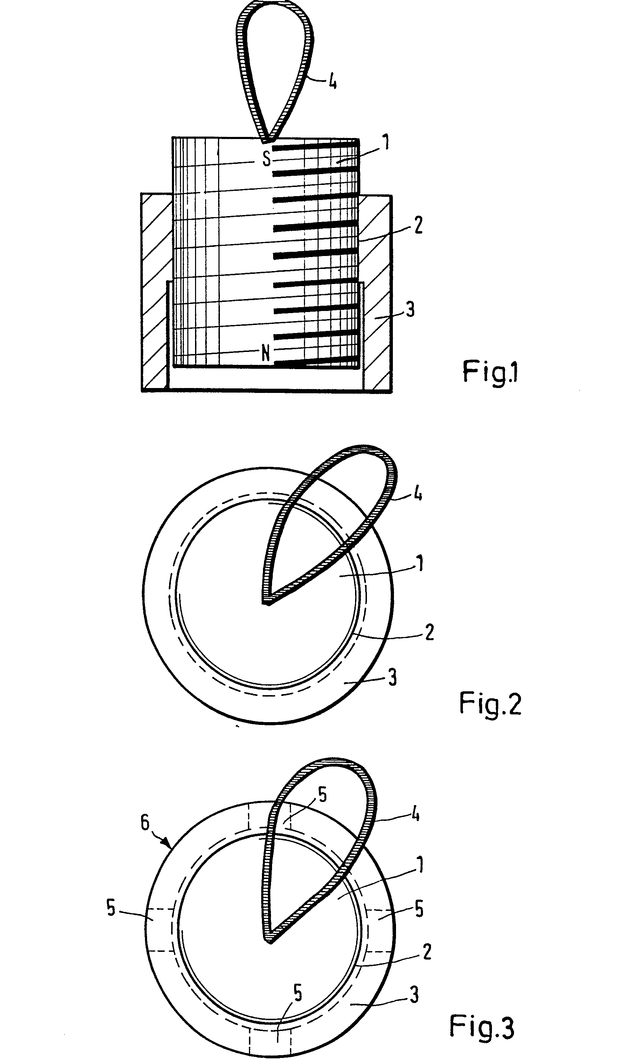

Gemäß Figur 1 und 2 besteht das Prüfgerät aus dem axial magnetisierten Dauermagneten (1) der über ein Gewinde (2) in dem koaxialen Topf (3) axial verstellbar ist. Der bevorzugt aus Kunststoff oder glasfaserverstärktem Kunststoff bestehende Topf (3) wird auf die Oberfläche des zu prüfenden Betonteils aufgesetzt. Durch Drehen am Dauermagneten (1) wird dieser in die gewünschte Lage zur Betonoberfläche gebracht. Durch Anbringen von Eichstrichen auf der Oberfläche des Dauermagneten (1) kann die Einstellung auf die gewünschte Lage desselben gegenüber dem Topf (3) erleichtert werden. Die Schlaufe (4) ermöglicht das Tragen und Festhalten des Prüfgeräts.

Bei der Ausführung gemäß Figur (3) ist die Wand des Topfes (3) bei der Ausführung gemäß Figuren 1 und 2 durch Füße (5) ersetzt, wodurch sich die Form eines Gestells (6) ergibt.

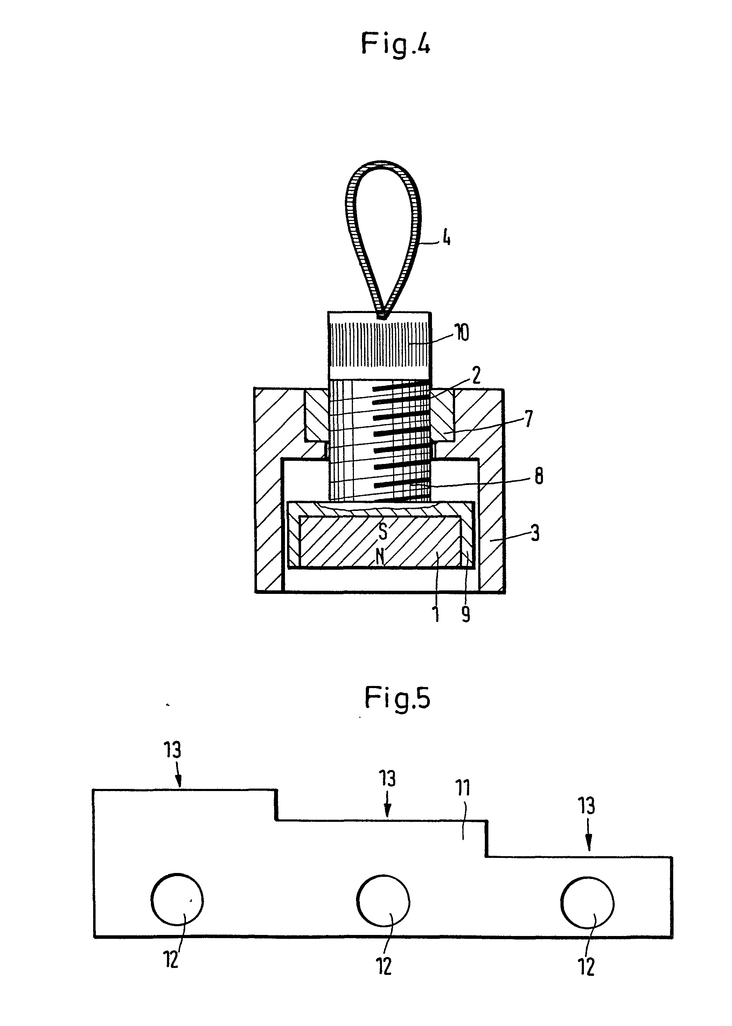

Bei der Ausführung des neuerungsgemäßen Prüfgeräts gemäß Figur 4 ist eine Büchse (7), z. B. aus Messing, in den Topf (3) eingespritzt. Die Büchse (7) trägt das Gewinde (2) an ihrem Innenumfang, das mit einem Gewinde an der Außenumfangsfläche eines Zapfens (8) in Eingriff steht, an dessen unterem Ende das aus Dauermagnet (1) und diesem umgebenden Weicheisentopf (9) bestehende Dauermagnetsystem befestigt ist. Am oberen Ende des Zapfens (8) kann eine Rändelung (10) zur Erleichterung des Drehens vorgesehen sein.

Anstelle der Schraubverbindung (2) kann auch eine Gleit-Schiebeführung zur axialen Verstellung des Dauermagneten (1) in dem Topf (3) oder Gestell (6) vorgesehen sein.

Die in Figur 5 dargestellte Justiervorrichtung (11) dient der Eichung des neuerungsgemäßen Prüfgeräts. Sie besteht aus einem stufenweise abgesetzten Block, in dem auf gleicher Höhe Eisenstäbe (12) eingesetzt sind. Je nach Größe der geforderten Betonüberdeckung wird das Prüfgerät auf die eine oder andere Stufe (13) aufgesetzt. Der Magnet wird in dem Topf oder Gestell solange gedreht, bis gerade Haftkraft spürbar ist. In dieser Einstellung wird das Gerät dann von der Justiervorrichtung (11) abgenommen und auf das zu prüfende Betonteil aufgesetzt.

- 4 -

0080676

Die Eich- oder Justiervorrichtung (11) ist auch dazu geeignet, die tatsächliche Lage des Moniereisens in dem zu prüfenden Betonteil zu ermitteln. Dazu wird das Prüfgerät zunächst auf das zu prüfende Betonteil aufgesetzt und der Dauermagnet soweit axial in dem Topf oder Gestell verschoben, bis gerade Haftkraft spürbar wird. In dieser Stellung wird dann das Prüfgerät von dem zu prüfenden Betonteil abgenommen und auf die Eich- oder Justiervorrichtung aufgesetzt. Die Stufe der Eich- oder Justiervorrichtung, auf der gerade Haftkraft wahrgenommen wird, kennzeichnet die an dem zu prüfenden Betonteil vorliegende Betonüberdeckung.

Als Magnetmaterial kommt bevorzugt solches mit hohem Energieprodukt, speziell hochkoerzitives Material, wie Selten Erden-Kobalt-Dauermagnetlegierungen in Betracht, die hohe Haftkräfte bei geringem Magnetgewicht aufweisen.

<div align="center">Ansprüche</div>

**0080676**

1. Prüfgerät für die Ermittlung der Größe der Betonüberdeckung an Betonteilen mit Stahlarmierung, gekennzeichnet durch einen in einen Topf (3)
oder in ein Gestell (6) aus nichtmagnetisierbarem Material axial verstellbar eingesetzten Dauermagneten (1)

2. Prüfgerät nach Anspruch 1, gekennzeichnet durch eine Gewindeverbindung (2) zwischen Dauermagnet (1) und Gestell (6) oder Topf (3).

3. Prüfgerät nach Anspruch 1 oder 2, gekennzeichnet durch einen Topf (3)
oder ein Gestell (6) aus Kunststoff oder glasfaserverstärktem Kunststoff.

0080676

Fig.1

Fig.2

Fig.3

Fig.4

Fig.5

Europäisches
Patentamt

**EUROPÄISCHER RECHERCHENBERICHT**

## EINSCHLÄGIGE DOKUMENTE

EP 82110738.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DD - A - 26 527 (BRUNA)  <br> * Spalte 2, Zeile 23 - Spalte 3, Zeile 12; Fig. *  <br> -- | 1 | G 01 B  7/10 |
| X | US - A - 2 749 505 (MC NARY)  <br> * Spalte 2, Zeilen 18-60; Spalte 1, Zeilen 1-3; Fig. 2 *  <br> -- | 1 | |
| X | US - A - 2 625 585 (KROUSE)  <br> * Spalte 1, Zeilen 1-10; Spalte 3, Zeilen 33-44; Fig. 1,2 *  <br> ---- | 1 | |

**RECHERCHIERTE SACHGEBIETE (Int. Cl. ³)**

G 01 B  7/00

G 01 N 27/00

G 01 N 33/00

Der vorliegende Recherchenbericht wurde für alle Patentansprüche erstellt.

| Recherchenort | Abschlußdatum der Recherche | Prüfer |
|---|---|---|
| WIEN | 04-02-1983 | ERBER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82